# EUROPEAN PATENT APPLICATION

(11) **EP 2 174 806 A1**
(43) Date of publication of application: **14.04.2010**
(21) Application number: 08165981.5
(22) Date of filing: 07.10.2008
(51) Int. Cl.: B60C 23/04

(54) **Wireless tire pressure monitor system**

(71) Applicant: Tung Thih Electronic Co., Ltd., Taoyuan Hsien (TW)
(72) Inventor: Chen, Shin-Chung, Taoyuan Hsien (TW); Chen, Sen-Jung, Taoyuan Hsien (TW); Yang, Shen-Sheng, Taoyuan Hsien (TW)
(74) Representative: Dossmann, Gérard

(57) **Abstract**

A wireless tire pressure monitor system has multiple pressure sensors (20) and at least one receiving module (30). The pressure sensors (20) detect tire pressures and transmit wireless signals representing the tire pressure. The at least one receiving module (30) is mounted on a chassis (12) of a vehicle (10) at a geometric center of the pressure sensors and has an annular antenna (32). The annular antenna (32) receives wireless signals from the pressure sensors (20) equally. Therefore, because distances between the receiving module (30) and the pressure sensors (20) are the same and the annular antenna (32) has good receiving characteristics, the wireless tire pressure monitor system has a high hit ratio for receiving wireless signals.

## Description

The present invention relates to a wireless tire pressure monitor system, and more particularly to a wireless tire pressure monitor system having high hit ratio for receiving wireless signals.

Many new designs are invented for vehicles to improve aesthetics, efficiency and safety, such as vehicle braking detectors and tire pressure monitor systems (TPMS) or the like. The TPMS detects whether tire pressure is normal.

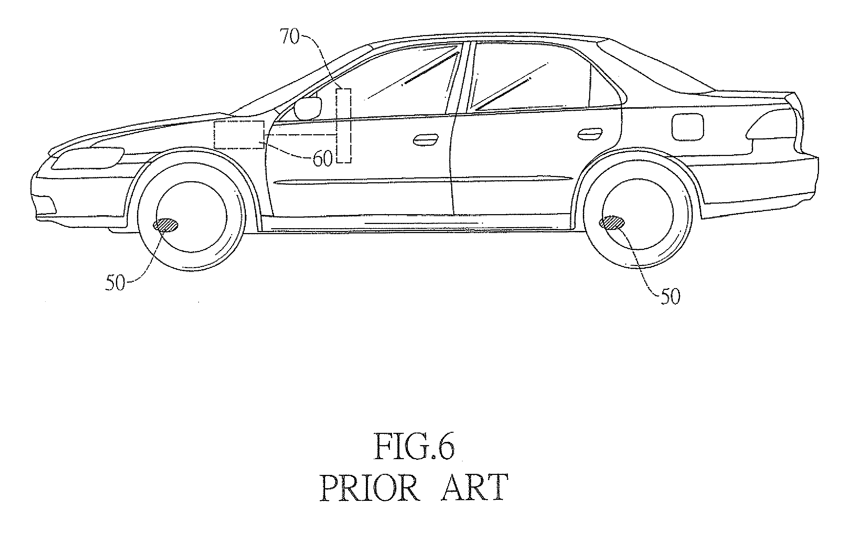

With reference to Fig. 6, a conventional TPMS is mounted in a vehicle having tires and comprises multiple pressure sensors (50), a monitor (70) and a receiving module (60). The pressure sensors (50) are mounted respectively in the tires to detect tire pressures and transmit wireless signals representing the tire pressures. The monitor (70) is mounted in the vehicle, near a driver's seat. The receiving module (60) is mounted adjacent to and connected to the monitor (70) and receives the wireless signals from the pressure sensors (50) so the monitor (70) shows information related to the tire pressures.

However, because the monitor (70) is mounted near the driver's seat, the receiving module (60) is closer to the front tires than the rear tires. Accordingly, transmission distances between the pressure sensors (50) in the rear tires and the receiving module (60) are longer than transmission distances between the pressure sensors (50) in the front tires and the receiving module (60). The receiving module (60) may miscommunicate with the sensors (50) in the rear tires.

Furthermore, being located adjacent to other devices in the vehicle such as GPS, radios and the like, the receiving module (60) of the conventional TPMS may receive a wrong signal or misread the signal due to electromagnetic interference.

The above mentioned shortcomings are the main reasons that cause the conventional TPMS having low hit ratio. Therefore, the conventional TPMS suffers from the low hit ratio, and the conventional TPMS may mis-detect abnormal tire pressures. Mis-detection of abnormal tire pressures may cause a driver to continue driving despite being at risk.

To overcome the shortcomings, the present invention provides a wireless tire pressure monitor system having high hit ratio for receiving wireless signals to mitigate or obviate the aforementioned problems.

The main objective of the invention is to provide a wireless tire pressure monitor system having high hit ratio for receiving wireless signals. The wireless tire pressure monitor system can inform drivers of abnormal tire pressure precisely and timely.

The wireless tire pressure monitor system in accordance with the present invention comprises:
multiple pressure sensors detecting tire pressures and transmitting wireless signals representing the tire pressures; and
at least one receiving module being mounted on a chassis of a vehicle, being at a geometric center of the pressure sensors and having
an annular antenna receiving the wireless signals from the pressure sensors equally.

Therefore, the present invention avoids external electromagnetic interference and has a high hit ratio for receiving wireless signals.

Other objectives, advantages and novel features of the invention will become more apparent from the following detailed description when taken in conjunction with the accompanying drawings.
Fig. 1 is a side view of a wireless tire pressure monitor system in accordance with the present invention, shown mounted in a vehicle;
Fig. 2 is a top view of the wireless tire pressure monitor system in Fig. 1;
Fig. 3 is a perspective view of receiving patterns of an annular antenna of a receiving module of the wireless tire pressure monitor system in Fig. 2;
Fig. 4 is a top view of the wireless tire pressure monitor system in Fig. 2 showing a receiving range of the annular antenna and transmission ranges of the pressure sensors;
Fig. 5 is a top view of the wireless tire pressure monitor system in a heavy goods vehicle; and
Fig. 6 is a side view of a conventional tire pressure monitor system in a vehicle.

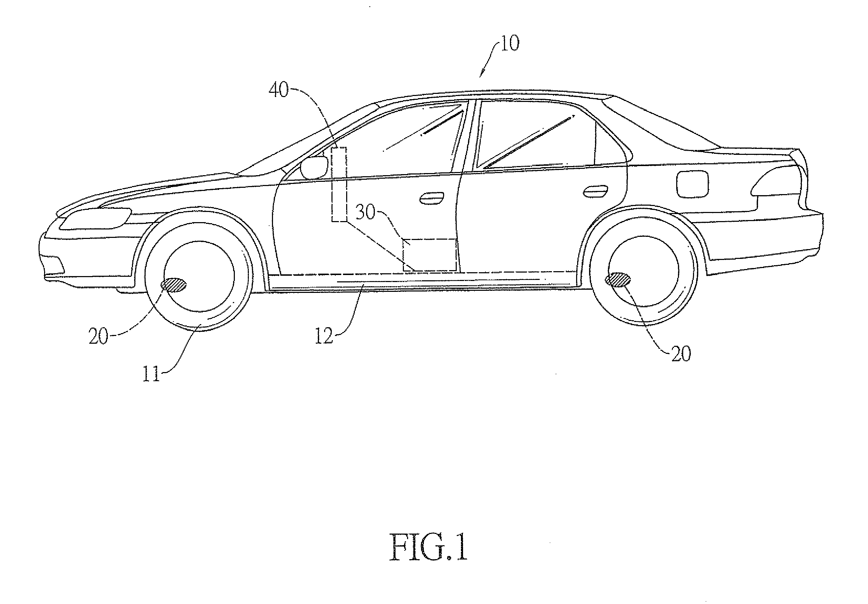

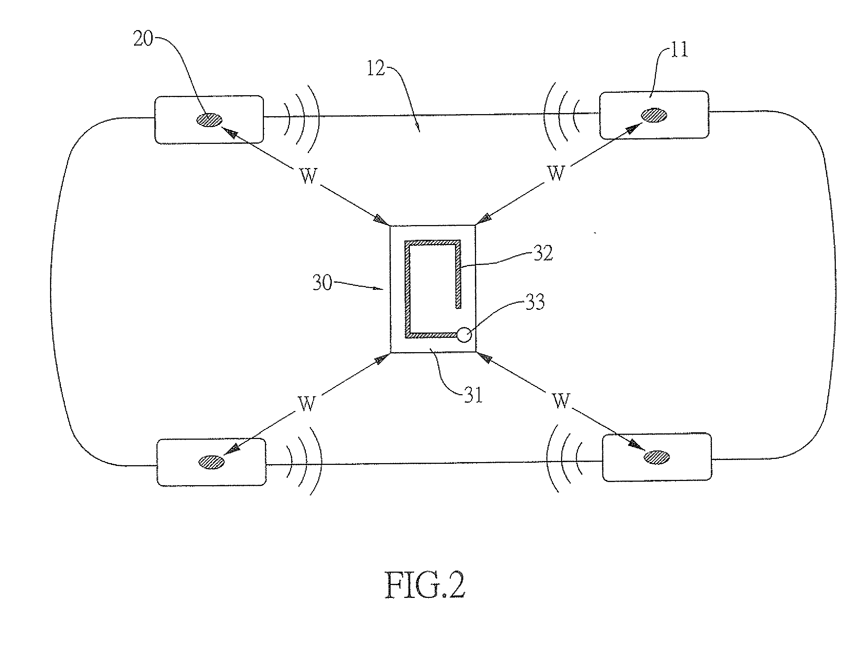

With reference to Figs. 1 and 2, a wireless tire pressure monitor system in accordance with the present invention is mounted in a vehicle (10) and comprises multiple pressure sensors (20) and at least one receiving module (30).

The pressure sensors (20) are mounted respectively in tires (11) of the vehicle (10) to detect tire pressures, and each pressure sensor (20) transmits a wireless signal representing the tire pressure of the corresponding tire (11).

The receiving module (30) is mounted on a chassis (12) of the vehicle (10) at a geometric center of the pressure sensors (20) so distances (W) between the receiving module (30) and the pressure sensors (20) are the same as each other. Because the receiving module (30) is mounted on a chassis (12) of the vehicle (10), the distances (W) between the receiving module (30) and the corresponding pressure sensors (20) are as short as possible when the distances (W) are the same as each other.

Furthermore, the receiving module (30) comprises an annular antenna (32). The annular antenna (32) receives the wireless signals from the pressure sensors (20), is mounted on a carrier (31) through a connector (33) and is electrically connected to circuits on the carrier (31). In addition, the annular antenna (32) may be, but is not limited to rectangular, elliptical, polygonal or the like.

According to existing techniques, the receiving module (30) may further process and transform the wireless signals into tire pressure information representing tire pressure statuses to the driver in the vehicle (10). Moreover, the present invention may further comprise a monitor (40). The monitor (40) is mounted near a driver's seat in the vehicle (10) and is electronically connected to the receiving module (30) and displays the tire pressure information to a driver of the vehicle (10).

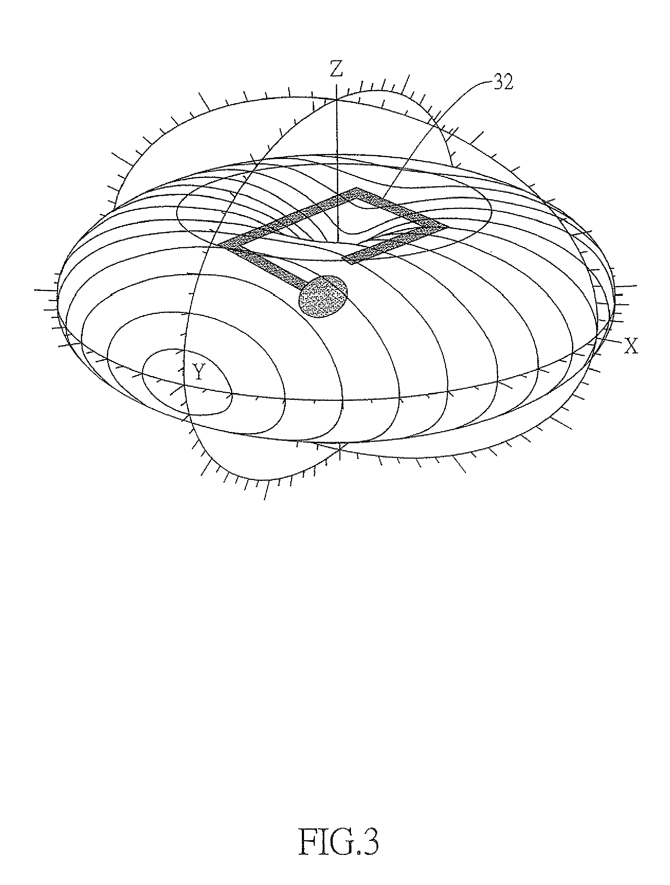

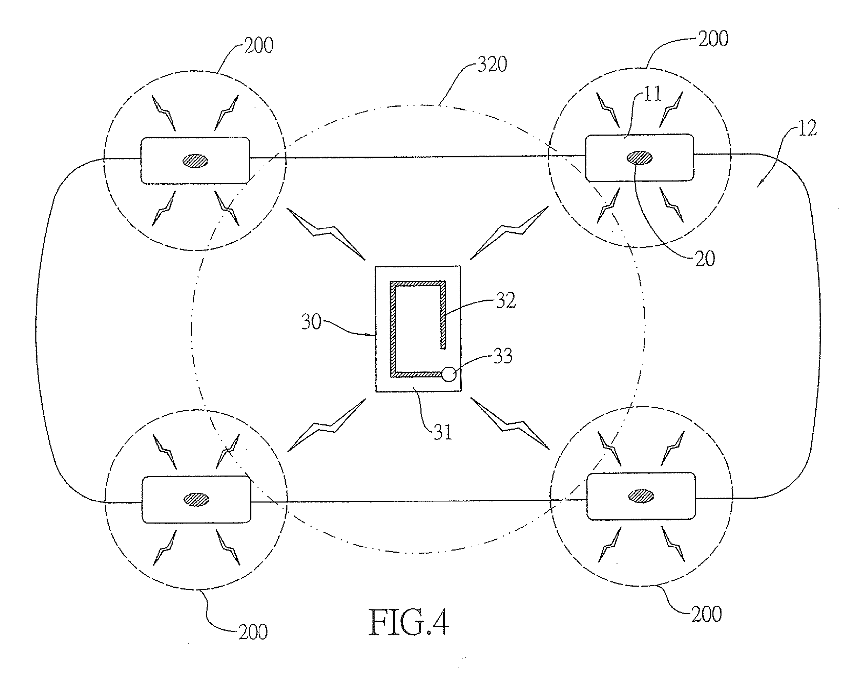

With further reference to Fig. 3, preferably the annular antenna (32) is rectangular. The receiving patterns in Fig. 3 shows that the annular antenna (32) has good characteristics to receive wire signals from all directions. With further reference to Fig. 4, showing a receiving range (320) of the annular antenna (32) and multiple transmission ranges (200) of the pressure sensors (20), because the annular antenna (32) has good receiving patterns, the receiving range (320) or the annular antenna (32) is large enough to reach the transmission ranges (200) or the pressure sensors (20). Accordingly, the hit ratio of the present invention is improved.

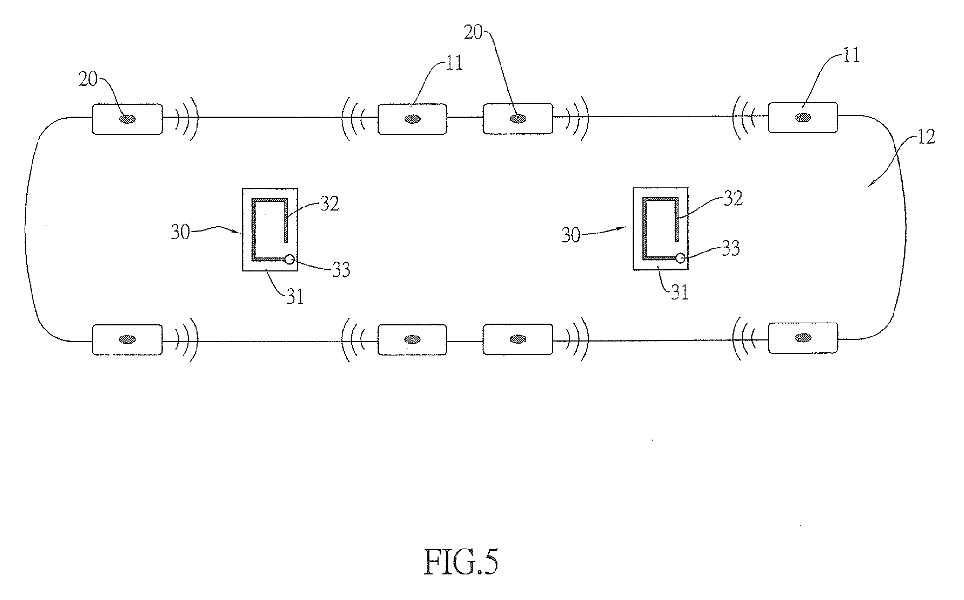

With further reference to Fig. 5, the wireless tire pressure monitor system of the present invention may be mounted in a heavy goods vehicle, such as a container truck, articulated truck or the like. The heavy goods vehicle may have eight tires so the wireless tire pressure monitor system of the present invention has eight pressure sensors (20) and two receiving modules (30). The pressure sensors (20) are mounted respectively in the eight tires. The receiving modules (30) are mounted on the chassis of the heavy goods vehicle. One of the receiving modules (30) is at a geometric center of the pressure sensors (20) in four of the eight tires, and the other receiving module (30) is at a geometric center of the pressure sensors (20) another four of the eight tires.

A configuration of receiving modules (30) and pressure sensors (20) may change based on the type of the vehicle.

The above-mentioned wireless tire pressure monitor system has the following advantages.
1. Because the at least one receiving module (30) is at the geometric center of the pressure sensors (20), the wireless signals from the pressure sensors (20) can be equally received by the receiving module (30). Therefore, the wireless tire pressure monitor system of the present invention has a high hit ratio for receiving wireless signals.
2. The annular antenna (32) used in the present invention is capable of receiving wireless signals from all directions. A monopole antenna in the conventional tire pressure monitor system has weak receiving patterns so it is easy to receive interference signals. Therefore, in contrast with the conventional tire pressure monitor system, the present invention uses different antenna to improve efficiency for receiving correct wireless signals.
3. The at least one receiving module (30) can avoid external electromagnetic interference because it is mounted on the chassis (12) of the vehicle.

Even though numerous characteristics and advantages of the present invention have been set forth in the foregoing description, together with details of the structure and function of the invention, the disclosure is illustrative only. Changes may be made in detail, especially in matters of arrangement of parts within the principles of the invention to the full extent indicated by the broad general meaning of the terms in which the appended claims are expressed.

## Claims

1. A wireless tire pressure monitor system comprising:
multiple pressure sensors (20) detecting tire pressures and transmitting wireless signals representing the tire pressures; and
at least one receiving module (30) being mounted on a chassis (12) of a vehicle (10), being at a geometric center of the pressure sensors (20) and having
an annular antenna (32) receiving the wireless signals from the pressure sensors (20) equally.

2. The system as claimed in claim 1, wherein the annular antenna (32) is rectangular, circular, elliptical or polygonal.

3. The system as claimed in claim 1, wherein the receiving module (30) further processes and transforms the wireless signals into tire pressure information representing tire pressure statuses.

4. The system as claimed in claim 3 further comprising a monitor (40) being connected to the receiving module (30), mounted in the vehicle (10) and displaying the tire pressure information.
